# EUROPÄISCHE PATENTSCHRIFT

(11) **EP 3 497 325 B1**
(45) Veröffentlichungstag und Bekanntmachung des Hinweises auf die Patenterteilung: **07.06.2023**
(21) Anmeldenummer: 17748742.8
(22) Anmeldetag: 03.08.2017
(51) Int. Cl.: F03D 13/20, E04H 12/34

(54) **TURMSEGMENT, TURMABSCHNITT, TURM, WINDENERGIEANLAGE SOWIE VERFAHREN ZUM HERSTELLEN EINES TURMSEGMENTS UND ZUM VERBINDEN VON TURMSEGMENTEN**
TOWER SEGMENT, TOWER SECTION, TOWER, WIND TURBINE, AND METHOD FOR PRODUCING A TOWER SEGMENT AND FOR CONNECTING TOWER SEGMENTS
SEGMENT DE MÂT, PARTIE DE MÂT, MÂT, ÉOLIENNE AINSI QUE PROCÉDÉ PERMETTANT DE FABRIQUER UN SEGMENT DE MÂT ET DE RELIER DES SEGMENTS DE MÂT

(30) Priorität: 08.08.2016 DE 102016114661
(43) Veröffentlichungstag der Anmeldung: 19.06.2019
(73) Patentinhaber: Wobben Properties GmbH, 26607 Aurich (DE)
(72) Erfinder: LONGERU, Markus, 21684 Stade (DE); BÜRKNER, Falko, 28757 Bremen (DE)
(74) Vertreter: Eisenführ Speiser
(86) Internationale Anmeldenummer: PCT/EP2017/069644
(87) Internationale Veröffentlichungsnummer: WO 2018/029070

(56) Entgegenhaltungen:
- EP-A2- 1 156 175
- WO-A1-00/49249
- WO-A1-03/083236
- WO-A1-2010/044380
- WO-A1-2011/058158
- WO-A2-2011/029515
- DE-A1-102013 016 604
- US-A- 1 086 295
- US-A1- 2014 215 930
- US-B1- 9 062 662

## Beschreibung

Die Erfindung betrifft ein Turmsegment eines Turms einer Windenergieanlage, einen Turmabschnitt einer Windenergieanlage, einen Turm einer Windenergieanlage, eine Windenergieanlage, ein Verfahren zum Herstellen eines Turmsegments einer Windenergieanlage und ein Verfahren zum Verbinden von Turmsegmenten einer Windenergieanlage.

Türme von Windenergieanlagen, insbesondere von Horizontalachsen-Windenergieanlagen tragen zu einem erheblichen Teil zu den Gesamtkosten der Herstellung einer Windenergieanlage bei. Insbesondere die größer werdenden Rotordurchmesser und Nennleistungen von Windenergieanlagen führen dazu, dass auch die Türme größer werden und/oder höheren Belastungen ausgesetzt sind. Insbesondere die Fertigung und/oder Montage der Türme ist bzw. sind zeit- und kostenaufwändig.

Es ist daher eine Aufgabe der vorliegenden Erfindung, ein Turmsegment eines Turms einer Windenergieanlage, einen Turmabschnitt einer Windenergieanlage, einen Turm einer Windenergieanlage, eine Windenergieanlage, ein Verfahren zum Herstellen eines Turmsegments einer Windenergieanlage und ein Verfahren zum Verbinden von Turmsegmenten einer Windenergieanlage anzugeben, welche einen oder mehrere Nachteile existierender Lösungen verringern oder beseitigen. Es ist ferner eine Aufgabe der vorliegenden Erfindung, ein Turmsegment eines Turms einer Windenergieanlage, einen Turmabschnitt einer Windenergieanlage, einen Turm einer Windenergieanlage, eine Windenergieanlage, ein Verfahren zum Herstellen eines Turmsegments einer Windenergieanlage und ein Verfahren zum Verbinden von Turmsegmenten einer Windenergieanlage anzugeben, welche die Herstellung und/oder die Montage von Turmabschnitten und/oder Türmen von Windenergieanlagen vereinfachen und/oder verbessern und/oder kostengünstiger machen.

Das Deutsche Patent- und Markenamt hat in der Prioritätsanmeldung zu vorliegender Anmeldung folgenden Stand der Technik recherchiert: DE 10 2012 011 175 A1, DE 10 2013 016 604 A1.

In der WO 03/083236 A1 ist ein Gitterturm mit einer Hülle offenbart. Ferner ist in der WO 2010/044380A1 eine turmartige Struktur und ein Herstellungsverfahren für diese gelehrt. Aus US 9 062 662 B1 ist eine hybride Stützstruktur für den Turm einer Windkraftanlage bekannt, die pultrudierte Glasfaserverbundwerkstoffe mit Stahlbeton kombiniert.

Diese Aufgabe wird gelöst durch ein Turmsegment eines Turms einer Windenergieanlage, umfassend ein Druckelement und ein Zugelement, wobei das Zugelement mit seiner Haupterstreckungsrichtung im Einbauzustand im Wesentlichen horizontal angeordnet und in einer Richtung orthogonal zu seiner Haupterstreckungsrichtung von dem Turmsegment beabstandet ist und mit dem Druckelement über ein Zwischenelement verbunden ist.

Gemäß der Erfindung ist vorgesehen, dass ein Turmsegment ein Druckelement und ein Zugelement umfasst, die voneinander beabstandet und durch ein Zwischenelement verbunden sind.

Türme von Windenergieanlagen weisen in der Regel im Einbauzustand und im Betriebszustand eine vertikale Längsachse auf und einen ringförmigen Querschnitt orthogonal zu dieser Längsachse. Dieser ringförmige Querschnitt kann kreisringförmig ausgebildet sein oder auch eine polygonale Form aufweisen. Unter dem Begriff ringförmig wird daher in dieser Anmeldung nicht nur eine kreisringförmige Ausgestaltung verstanden, sondern auch eine polygonale und/oder mehreckige Ausgestaltung mit mehreren geraden Abschnitten.

Begriffe wie radial, tangential, Umfang etc. werden in dieser Anmeldung bezogen auf die Längsachse eines Turmes verstanden, und beziehen sich auf jegliche Querschnittsformen eines solchen Turmes, insbesondere sowohl auf kreisringförmige Querschnitte als auch auf polygonale Querschnitte.

Ein Turmsegment wird hier verstanden als ein Teil eines ringförmigen Turmabschnitts, also als ein Element, welches sich nur über einen Teil des Umfangs des Turmes erstreckt. Ein ringförmiger Turmabschnitt wird vorzugsweise aus mehreren

Turmsegmenten gebildet, wobei zwischen den Turmsegmenten in der Regel im Einbauzustand und im Betriebszustand vertikal ausgerichtete Längsfugen ausgebildet sein können. Ein Turm umfasst mehrere, im Einbauzustand und im Betriebszustand der Windenergieanlage vertikal übereinander angeordnete, Turmabschnitte. Als Einbauzustand wird hier insbesondere ein Zustand verstanden, der sich auf den vertikal ausgerichteten Turm bezieht, der - sofern auf dem Turm eine entsprechend betriebsbereite Gondel mit Rotor angeordnet ist - auch dem Betriebszustand der Windenergieanlage entspricht. Eine im Wesentlichen horizontale Ausrichtung der Längsachse, z.B. bei der Fertigung und/oder beim Transport des Turms oder Teilen davon, ist hier nicht mit Einbauzustand gemeint. Die für den Einbauzustand beschriebenen Ausrichtungen sind im Fertigungs- und/oder Transportzustand entsprechend an die temporär nicht vertikal ausgerichtete Längsachse des Turms bzw. eines Teils davon anzupassen.

Türme von Windenergieanlagen verjüngen sich in der Regel von ihrem unteren zu ihrem oberen Ende. Die Ausrichtung der Turmwand eines sich verjüngenden Turms weicht in der Regel nur um wenige Grad von der Vertikalen ab. Wenn in dieser Anmeldung auf Ausrichtungen, insbesondere im Einbauzustand, Bezug genommen wird, wie beispielsweise oben, unten, radial, horizontal, vertikal, etc., soll dies daher entsprechend auch für sich verjüngende Türme und dementsprechend leicht gegenüber der Vertikalen geneigte Turmwände gelten.

Verschiedene Bauweisen für Türme von Windenergieanlagen sind bekannt. Insbesondere haben sich Türme in Massivbauweise, aus Beton und/oder Stahlbeton und/oder Spannbeton und/oder Stahl durchgesetzt.

Insbesondere aufgrund der großen Durchmesser von ringförmigen Turmabschnitten, sowohl in kreisringförmiger als auch in polygonaler Form, ist es bekannt, Turmabschnitte in Längsrichtung in Turmsegmente zu unterteilen, da die Turmsegmente leichter hergestellt und/oder transportiert werden können als ringförmige Turmabschnitte. Die Turmsegmente weisen in der Regel eine flächige Erstreckung auf, welche die Turmwand bildet, und eine orthogonal und/oder radial hierzu ausgebildete Dicke, welche in der Regel um ein Vielfaches kleiner ist als die flächige Erstreckung. Turmsegmente für Türme mit polygonalem Querschnitt sind in der Regel eben ausgebildet, weisen also keine Krümmung in ihrer flächigen Erstreckung auf. Turmsegmente für Türme mit kreisringförmigem Querschnitt hingegen weisen in der Regel eine Krümmung und/oder einen Radius in ihrer flächigen Erstreckung auf und haben somit die Form eines Mantelsegments eines Zylinders oder Kegels oder Kegelstumpfs.

Erfindungsgemäß ist nun vorgesehen, dass das Turmsegment ein Druckelement aufweist, welches in der Regel die oben beschriebene flächige Erstreckung aufweist und eine demgegenüber um ein Vielfaches kleinere orthogonale Dicke, wobei die flächige Erstreckung gekrümmt oder eben sein kann. Beabstandet von diesem Druckelement ist ein Zugelement angeordnet, welches in der Regel eine stabförmige Ausgestaltung aufweist, bei der eine Haupterstreckungsrichtung um ein Vielfaches größer ist als die Erstreckung orthogonal zu dieser Haupterstreckungsrichtung. Das Druckelement und das Zugelement sind über ein Zwischenelement miteinander verbunden. Das Zugelement ist im Einbauzustand im Wesentlichen horizontal ausgerichtet.

Die Zwischenelemente können vorzugsweise mit einem ersten Ende in die Druckelemente einbetoniert sein. Ferner vorzugsweise sind die Zwischenelemente mit Kopfbolzendübeln an den Druckelementen befestigt.

Die Verbindung zwischen den Zwischenelementen und den Zugelementen kann vor Ort bei der Montage des Turms oder bereits bei der Herstellung der Turmsegmente, beispielsweise in einem Fertigteilwerk, erfolgen.

Das Zugelement dient im Wesentlichen dazu, Zugkräfte aufzunehmen, insbesondere in einer im Wesentlichen tangentialen Richtung. Das Druckelement dient im Wesentlichen dazu, Druckkräfte aufzunehmen. Das Zwischenelement dient im Wesentlichen dazu, Zugkräfte aufzunehmen, insbesondere in einer im Wesentlichen radialen Richtung. Das Zwischenelement ist vorzugsweise orthogonal zur Haupterstreckungsrichtung des Zugelements und/oder orthogonal zur Flächenerstreckung des Druckelements angeordnet und/oder radial angeordnet bezogen auf die Turmlängsachse. Ferner vorzugsweise ist das Zwischenelement im Einbauzustand im Wesentlichen horizontal ausgerichtet. Vorzugsweise kann ein Turmsegment zwei, drei oder mehrere Zwischenelemente aufweisen. Ein Turmsegment kann auch zwei, drei oder mehrere Zugelemente aufweisen, wobei die zwei, drei oder mehreren Zugelemente im Einbauzustand vorzugsweise in vertikaler Richtung voneinander beabstandet sind.

Das Zugelement und das Druckelement sind orthogonal zu der Haupterstreckungsrichtung des Zugelements, vorzugsweise in einer im Wesentlichen horizontalen und/oder einer im Wesentlichen radialen Richtung, voneinander beabstandet. Vorzugsweise ist das Zugelement auf einer Innenseite des Druckelements angeordnet, im Einbauzustand und/oder im Betriebszustand der Windenergieanlage somit im Inneren des Turms. Ferner vorzugsweise ist das Zugelement mit seiner Haupterstreckungsrichtung im Wesentlichen parallel zur flächigen Erstreckung des Druckelements ausgerichtet, insbesondere bei Druckelementen mit einer flächigen Erstreckung ohne Krümmung.

Das Druckelement ist vorzugsweise aus Beton und/oder Stahlbeton und/oder Spannbeton ausgebildet. Das Zugelement ist vorzugsweise aus Metall, insbesondere Stahl, ausgebildet.

Vorzugsweise ist das Zugelement ausgebildet, mit Zugelementen benachbarter Turmsegmente verbunden zu werden. Ebenso ist vorzugsweise das Druckelement ausgebildet, mit Druckelementen benachbarter Turmsegmente verbunden zu werden, vorzugsweise in einer Stoßverbindung.

Die Verbindungen zwischen Turmsegmenten, insbesondere zwischen den Druckelementen benachbarter Turmsegmente und/oder Zugelementen benachbarter Turmsegmente, können vorzugsweise Zug-und/oder Druckkräfte übertragen. Insbesondere ist die Verbindung zwischen den Druckelementen benachbarter Turmsegmente vorzugsweise ausgebildet, Druckkräfte zu übertragen. Insbesondere ist die Verbindung zwischen den Zugelementen benachbarter Turmsegmente vorzugsweise ausgebildet, Zugkräfte zu übertragen.

Die Druckkräfte und Zugkräfte können bei der erfindungsgemäßen Lösung besonders effizient verteilt werden, da der durch die Beabstandung des Druckelements und des Zugelements voneinander ein Hebel genutzt werden kann. Ferner können auf diese Weise auch das Druckelement und das Zugelement besonders effizient dimensioniert werden, da aufgrund der Beabstandung die Hebelwirkung vorteilhaft ist. Zwischen den Druckelementen benachbarter Turmsegmente kann eine einfache Stoßverbindung zur Übertragung von Druckkräften realisiert werden, da über die Verbindung der Zugelemente benachbarter Turmsegmente eine Übertragung von Zugkräften erfolgen kann.

Erfindungsgemäß ist vorgesehen, dass das Zugelement ein Spannelement aufweist. Durch das Vorsehen eines Spannelements kann das Zugelement aktiv mit einer Zugkraft versehen werden. Das Spannelement kann vorzugsweise als Spannschloss ausgebildet sein. Ferner vorzugsweise weist das Spannelement eine Mehrzahl von Schrauben auf, wobei vorzugsweise durch das Anziehen der Schrauben eine Zugkraft auf das Zugelement aufgebracht werden kann.

Auf diese Weise kann in einem ringförmigen Turmabschnitt über die Verbindung der Zugelemente, vorzugsweise zu einem Zugelementring, eine Vorspannung auf die miteinander verbundenen Druckelemente ausgeübt werden.

Insbesondere können in einem ringförmigen Turmabschnitt sowohl Turmsegmente vorgesehen sein, die ein Spannelement aufweisen, als auch Turmsegmente, die kein Spannelement aufweisen. Vorzugsweise ist mindestens ein Turmsegment mit einem Spannelement pro Turmabschnitt vorgesehen. Ferner vorzugsweise sind Turmsegmente mit Spannelement und Turmsegmente ohne Spannelement in einem Turmabschnitt alternierend angeordnet.

Erfindungsgemäß ist vorgesehen, dass das Zwischenelement gelenkig ausgebildet ist und/oder gelenkig mit dem Druckelement und/oder mit dem Zugelement verbunden ist. In einer bevorzugten Ausführungsform ist vorgesehen, dass das Zwischenelement zwei gelenkig miteinander verbundene Zwischenstücke aufweist.

Eine gelenkige Verbindung ist insbesondere eine Verbindung, die um eine Achse schwenkbar ausgebildet ist, wobei diese Achse vorzugsweise im Wesentlichen vertikal ausgerichtet ist im Einbauzustand, wobei hier, wie auch bereits oben beschrieben, insbesondere auch eine Ausrichtung dieser Achse parallel zu einer sich gegebenenfalls verjüngenden Turmwand umfasst ist.

Über eine solche gelenkige Verbindung ist das Zwischenelement vorzugsweise mit dem Druckelement und/oder mit dem Zugelement verbunden. Ferner vorzugsweise können auch Zwischenstücke des Zwischenelements selbst durch eine solche gelenkige Verbindung verbunden sein.

Der Vorteil einer solchen gelenkigen Verbindung des Zwischenelements ist es, dass auf diese Weise einfach und effizient ermöglicht werden kann, dass durch die Zwischenelemente und Zugelemente im Wesentlichen Zugkräfte übertragen werden, und durch die Druckelemente im Wesentlichen Druckkräfte. Die gelenkige Verbindung reduziert bzw. verhindert die Übertragung von anderen als Zugkräften durch das Zwischenelement und/oder das Zugelement. Ferner kann auf diese Weise sichergestellt werden, dass in einem Turmabschnitt mit mehreren miteinander verbundenen Turmsegmenten eine gleichmäßige Kraftverteilung erzielt wird. Insbesondere eine durch ein Spannelement aufgebrachte Vorspannkraft kann so gleichmäßig über die Zugelemente verteilt werden und auf diese Weise auch eine entsprechende gleichmäßige Vorspannung der Druckelemente bewirken.

Eine bevorzugte Weiterbildung zeichnet sich dadurch aus, dass das Druckelement mindestens eine Seitenfläche aufweist, die angeordnet und ausgebildet ist, im Einbauzustand eine Stoßverbindung mit einer Seitenfläche eines weiteren Turmsegments zu bilden.

Die Seitenfläche des Druckelements ist im Einbauzustand in der Regel in einer im Wesentlichen vertikalen Ebene angeordnet. Zwischen den Seitenflächen benachbarter Turmsegmente ist in der Regel eine, meist vertikale, Längsfuge gebildet.

Vorzugsweise ist die Seitenfläche ausgebildet und - insbesondere im Einbauzustand und im Betriebszustand - angeordnet, mit einer weiteren Seitenfläche eines weiteren Turmsegments eine Stoßverbindung zu bilden. Als Stoßverbindung wird hier insbesondere eine Verbindung verstanden, welche Druckkräfte übertragen kann und durch ein flächiges Aneinanderstoßen der beiden Seitenflächen von zwei Turmsegmenten erfolgt.

Bei Beaufschlagen der Stoßverbindung mit Druck, insbesondere durch die Vorspannung der Zugelemente, entsteht vorzugsweise eine kraftschlüssige Verbindung und/oder ein Reibschluss. Der Reibkoeffizient zwischen zwei Betonflächen liegt in der Regel bei ca. 0,5-1.

Es ist ferner bevorzugt, dass das Druckelement zwei Seitenflächen aufweist, die zueinander geneigt angeordnet sind.

Vorzugsweise liegen die beiden Seitenflächen eines Druckelements nicht nur jeweils in einer vertikalen Ebene, sondern sind auch radial ausgerichtet. Auf diese Weise ergibt sich eine Neigung der beiden Seitenflächen zueinander. Dies hat unter anderem montagetechnische Vorteile, da durch diese Neigung der Seitenflächen zueinander ein Turmsegment einfach in einen Zwischenraum zwischen zwei benachbarten Turmsegmenten eingeführt und dort positioniert werden kann. Ferner ist diese Ausgestaltung zur Herstellung der Stoßverbindung und zur Herstellung der kraftschlüssigen Verbindung und/oder des Reibschlusses bevorzugt.

Gemäß einer bevorzugten Ausführungsform ist vorgesehen, dass das Zwischenelement mit dem Druckelement und/oder mit dem Zugelement und/oder die Zwischenstücke eines Zwischenelements mit Verbindungselementen verbunden sind, wobei die Verbindungselemente vorzugsweise wartungsfrei und/oder ausfallsicher ausgebildet sind.

Die Turmsegmente sind vorzugsweise im Wesentlichen wartungsfrei und/oder im Wesentlichen ausfallsicher ausgebildet. Hierfür ist insbesondere bevorzugt, dass die Verbindungen zwischen dem Zwischenelement und dem Zugelement und/oder den Druckelement diese Eigenschaften aufweisen. Hierzu ist auch bevorzugt, dass - sofern das Zwischenelement zwei oder mehrere Zwischenstücke aufweist - auch diese Zwischenstücke und ihre Verbindungen entsprechend wartungsfrei und/oder ausfallsicher ausgebildet sind. Daher ist es insbesondere bevorzugt, dass die zur Herstellung dieser Verbindungen verwendeten Verbindungselemente wartungsfrei und/oder ausfallsicher ausgebildet sind. Die Verbindungselemente können vorzugsweise als Muttern mit Splinten ausgebildet sein.

In einer weiteren bevorzugten Ausführungsform ist vorgesehen, dass das Druckelement an einer im Einbauzustand oberen Verbindungsfläche und/oder an einer im Einbauzustand unteren Verbindungsfläche ein, zwei oder mehrere Positionierungselemente aufweist.

Die Positionierungselemente können beispielsweise als Vorsprünge und/oder Vertiefungen, wie beispielsweise Dorne und/oder Hülsen, ausgebildet sein. Ferner vorzugsweise sind die Positionierungselemente derart ausgebildet und angeordnet, dass sie mit entsprechenden Positionierungselementen benachbarter, insbesondere in einer im Einbauzustand im Wesentlichen vertikalen Richtung benachbarter, Turmsegmente korrespondieren und/oder in Eingriff kommen können.

Das Vorsehen solcher Positionierungselemente kann der Zentrierung und/oder der Ausrichtung und/oder der temporären Stabilisierung von Turmsegmenten dienen, insbesondere bei deren Montage und insbesondere solange die Zugelemente eines Turmabschnitts noch nicht miteinander verbunden sind.

Eine weitere bevorzugte Fortbildung zeichnet sich dadurch aus, dass das Turmsegment zwei Zwischenelemente aufweist, deren Abstand voneinander in Haupterstreckungsrichtung des Zugelements ein Vielfaches von deren Abstand zu den Seitenflächen des Druckelements beträgt.

In dieser Ausführungsform ist eine Ausgestaltung vorgesehen, bei der die Zwischenelemente im Wesentlichen in Randbereichen des Turmsegments angeordnet sind, insbesondere an den Endbereichen des Zugelements und/oder an Endbereichen, insbesondere in Umfangsrichtung, des Druckelements. In einem aus solchen Turmsegmenten zusammengesetzten Turmabschnitt befinden sich somit die Zwischenelemente im Wesentlichen im Bereich der Längsfugen zwischen den Turmsegmenten, bei einem Turm mit polygonalem Querschnitt somit im Wesentlichen im Bereich der Ecken.

Ferner ist vorzugsweise vorgesehen, dass der Abstand zwischen dem Zugelement und dem Druckelement maximal 50% eines Radius eines Turms beträgt, insbesondere eines Turms, dessen Teil das Turmsegment ist. Bei einem sich verjüngenden Turm bezieht sich die Angabe vorzugsweise auf den Radius in der Höhe des Turms, in der das Turmsegment angeordnet ist. Der Radius des Turms kann sich auf den Innenradius oder den Außenradius oder einen gemittelten Wert beziehen. Vorzugsweise beträgt der Abstand zwischen dem Zugelement und dem Druckelement maximal 25%, insbesondere mindestens oder maximal 10% des Radius.

Vorzugsweise ist die Anpresskraft in den Längsfugen zwischen den Druckelementen größer als die in den Zugelementen vorhandene Zugspannung. Während die Anpresskraft in den Längsfugen für eine Ausgestaltung mit Winkeln zwischen den Druckelementen, welche nahe an 180° sind (was einer Turmform mit endlos vielen Ecken entspräche), mit der Zugkraft identisch wäre, erhöht sich die Anpresskraft in den Längsfugen mit abnehmender Eckenzahl bis hin zum 2-fachen der Zugkraft bei einem Minimum von drei Ecken.

Ferner ist bevorzugt, dass bei einer Ausgestaltung der Turmsegmente für einen Turm mit mehr als vier Ecken die in einem aus solchen Turmsegmenten aufgebauten Turmabschnitt auftretenden, im Wesentlichen radialen, Zugkräfte in den Zwischenelementen kleiner sind als die Zugvorspannung in den Zugelementen. In einer Ausgestaltung der Turmsegmente für einen Turm mit vier Ecken entsprechen die in einem aus solchen Turmsegmenten aufgebauten Turmabschnitt auftretenden, im Wesentlichen radialen, Zugkräfte in den Zwischenelementen vorzugsweise der Zugvorspannung in den Zugelementen. In einer Ausgestaltung der Turmsegmente für einen Turm mit drei Ecken sind die in einem aus solchen Turmsegmenten aufgebauten Turmabschnitt auftretenden, im Wesentlichen radialen, Zugkräfte in den Zwischenelementen vorzugsweise größer als die Zugvorspannung in den Zugelementen.

Gemäß einem weiteren Aspekt der Erfindung wird die eingangs genannte Aufgabe gelöst durch einen Turmabschnitt einer Windenergieanlage, umfassend zwei, drei oder mehrere zuvor beschriebene Turmsegmente, deren Zugelemente miteinander verbunden sind und deren Druckelemente über eine Stoßverbindung verbunden sind.

Die Stoßverbindung erfolgt vorzugsweise zwischen einander zugewandten Seitenflächen benachbarter Turmsegmente. Die Verbindung zwischen den Zugelementen benachbarter Turmsegmente erfolgt vorzugsweise schwenkbeweglich, insbesondere schwenkbar um eine im Wesentlichen vertikale Achse. Ferner vorzugsweise erfolgt diese Verbindung über einen Zugverbinder, der beispielsweise an seinen jeweiligen Enden schwenkbeweglich mit jeweils einem der beiden benachbarten Zugelemente verbunden ist.

Gemäß einer bevorzugten Ausführungsform des Turmabschnitts ist vorgesehen, dass die oberen Verbindungsflächen der Druckelemente in unterschiedlichen Ebenen liegen und/oder die unteren Verbindungsflächen der Druckelemente in unterschiedlichen Ebenen liegen.

Diese Ausgestaltung hat den Vorteil, dass keine umlaufenden Horizontalfugen entstehen, sondern die Horizontalfugen zwischen im Einbauzustand und/oder Betriebszustand vertikal übereinander angeordneten Turmsegmenten entlang der Umfangsrichtung des Turms vertikal versetzt zueinander angeordnet sind.

Gemäß einem weiteren Aspekt der Erfindung wird die eingangs genannte Aufgabe gelöst durch einen Turm einer Windenergieanlage, umfassend mindestens einen zuvor beschriebenen Turmabschnitt, und/oder mindestens ein zuvor beschriebenes Turmsegment.

Gemäß einem weiteren Aspekt der Erfindung wird die eingangs genannte Aufgabe gelöst durch eine Windenergieanlage, umfassend mindestens einen zuvor beschriebenen Turm, und/oder mindestens einen zuvor beschriebenen Turmabschnitt, und/oder mindestens ein zuvor beschriebenes Turmsegment.

Gemäß einem weiteren Aspekt der Erfindung wird die eingangs genannte Aufgabe gelöst durch ein Verfahren zum Herstellen eines zuvor beschriebenen Turmsegments einer Windenergieanlage, umfassend: Bereitstellen eines Druckelements, Bereitstellen eines Zugelements, Verbinden des Zugelements mit dem Druckelement über ein Zwischenelement, wobei das Zugelement mit seiner Haupterstreckungsrichtung im Einbauzustand im Wesentlichen horizontal angeordnet und in einer Richtung orthogonal zu seiner Haupterstreckungsrichtung von dem Turmsegment beabstandet ist, wobei das Zwischenelement gelenkig ausgebildet ist und/oder gelenkig mit dem Druckelement und/oder mit dem Zugelement verbunden ist..

Gemäß einem weiteren Aspekt der Erfindung wird die eingangs genannte Aufgabe gelöst durch ein Verfahren zum Verbinden von Turmsegmenten einer Windenergieanlage, umfassend: Bereitstellen von zwei zuvor beschriebenen Turmsegmenten, Verbinden der Druckelemente der beiden Turmsegmente durch eine Stoßverbindung, Verbinden der Zugelement der beiden Turmsegmente.

Die Verbindung der Turmsegmente untereinander, insbesondere der Druckelemente untereinander und/oder der Zugelemente untereinander, erfolgt vorzugsweise erst vor Ort bei der Montage des Turms. Auf diese Weise können die einzelnen Turmsegmente leichter transportiert werden.

Die Verbindung erfolgt vorzugsweise durch das Einbringen von Verbindungsmitteln in entsprechende Öffnungen und/oder Ausnehmungen an den zu verbindenden Elementen.

Gemäß einer bevorzugten Ausführungsform des Verfahrens zum Verbinden von Turmsegmenten einer Windenergieanlage ist vorgesehen, dass ein, zwei oder mehrere Turmsegmente ein Spannelement aufweisen, und diese Spannelemente gespannt werden, vorzugsweise durch Anziehen von Schrauben.

Die erfindungsgemäßen Verfahren und ihre möglichen Fortbildungen weisen Merkmale bzw. Verfahrensschritte auf, die sie insbesondere dafür geeignet machen, für ein erfindungsgemäßes Turmsegment und seine möglichen Fortbildungen und/oder einen erfindungsgemäßen Turmabschnitt und seine möglichen Fortbildungen verwendet zu werden.

Zu den Vorteilen, Ausführungsvarianten und Ausführungsdetails dieser weiteren Aspekte der Erfindung und ihrer möglichen Fortbildungen wird auch auf die vorangegangene Beschreibung zu den entsprechenden Merkmalen der Turmsegmente verwiesen.

Bevorzugte Ausführungsformen der Erfindung werden beispielhaft anhand der beiliegenden Figuren beschrieben. Es zeigen:
- Figur 1:: eine dreidimensionale Ansicht einer Windenergieanlage mit einem Turm und einer Gondel;
- Figur 2:: eine dreidimensionale Ansicht eines Turms für eine Windenergieanlage mit polygonalem Querschnitt;
- Figur 3:: einen Horizontalschnitt durch den Turm gemäß Figur 2;
- Figur 4:: eine vergrößerte Darstellung eines 90°-Ausschnitts gemäß Figur 3;
- Figur 5:: eine vergrößerte Darstellung einer Ecke gemäß Figur 4 mit eingezeichnetem Kraftfluss;
- Figur 6:: eine dreidimensionale Ansicht eines Turmabschnitts mit einer ersten Ebene von Turmsegmenten;
- Figur 7:: den Turmabschnitt gemäß Figur 6 mit zwei ersten Zugelementringen;
- Figur 8:: den Turmabschnitt gemäß Figur 7 mit einer zweiten Ebene von Turmsegmenten;
- Figur 9:: den Turmabschnitt gemäß Figur 8 mit zwei zweiten Zugelementringen;
- Figur 10:: eine Draufsicht auf einen Turm im Montagezustand mit einer ersten und einer zweiten Ebene von Turmsegmenten sowie einer noch nicht montierten dritten Ebene von Turmsegmenten; und
- Figur 11:: den Turm gemäß Figur 10 mit montierter dritter Ebene von Turmsegmenten.

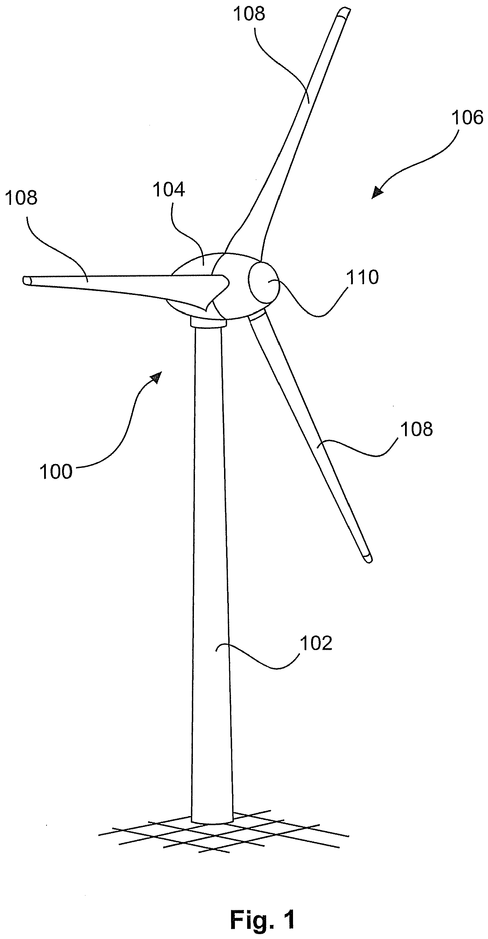

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der in Figur 1 gezeigte Turm 102 weist einen kreisringförmigen Querschnitt auf. Der Turm 102 kann erfindungsgemäße Turmsegmente aufweisen, wobei die hier in den weiteren Figuren dargestellten Turmsegmente für einen Turm mit polygonalem Querschnitt entsprechend von einer ebenen Ausgestaltung der Druckelemente auf eine gekrümmte Ausgestaltung zu ändern wären.

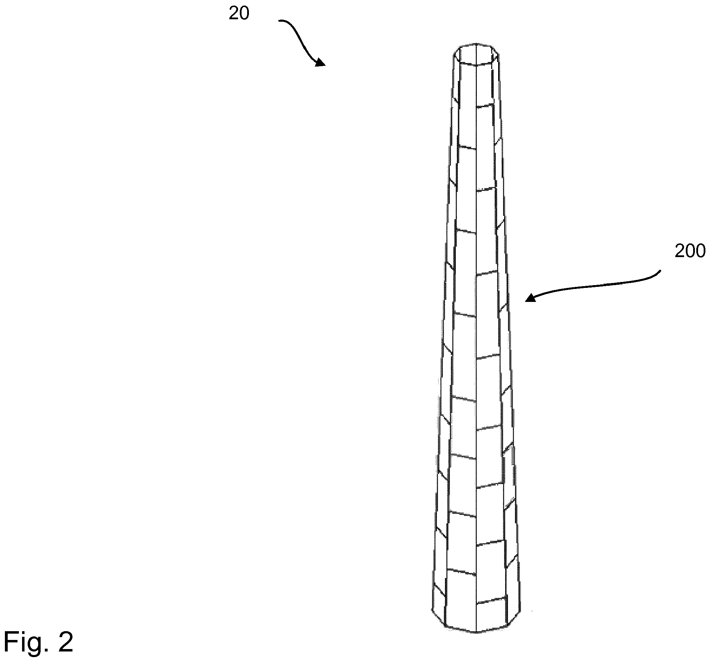

In Figur 2 ist ein Turm 20 für eine Windenergieanlage dargestellt, wobei der Turm 20 eine vertikale Längsachse und einen orthogonal zu dieser Längsachse polygonalen Querschnitt aufweist. Der Turm 20 umfasst eine Vielzahl von Turmsegmenten 200, deren flächige Erstreckung eben, ohne Krümmung oder Radius ausgebildet ist, sodass eine polygonale, hier 8-eckige, Form des Turms entsteht. Eine typische Höhe eines Turms eine Windenergieanlage beträgt beispielsweise 150m. Der Turm kann im Wesentlichen vollständig aus hier beschriebenen Turmsegmenten aufgebaut sein. Es kann jedoch auch nur ein Teil, vorzugsweise ein unterer Teil des Turms, beispielsweise bis zu einer Höhe von 75 m, aus hier beschriebenen Turmsegmenten aufgebaut sein und ein weiterer, vorzugsweise oberer, Teil des Turms beispielsweise als Stahlturm ausgebildet sein.

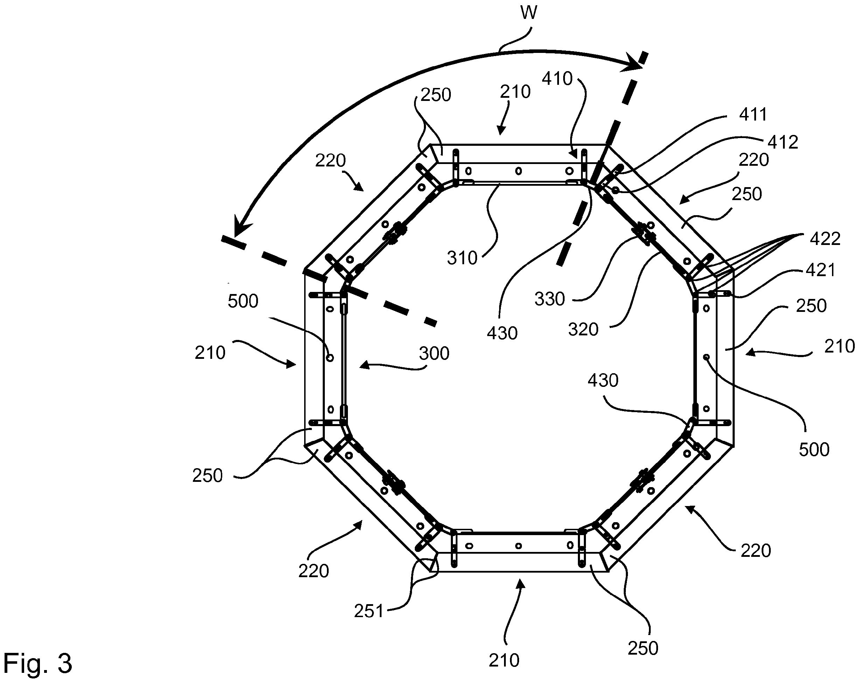

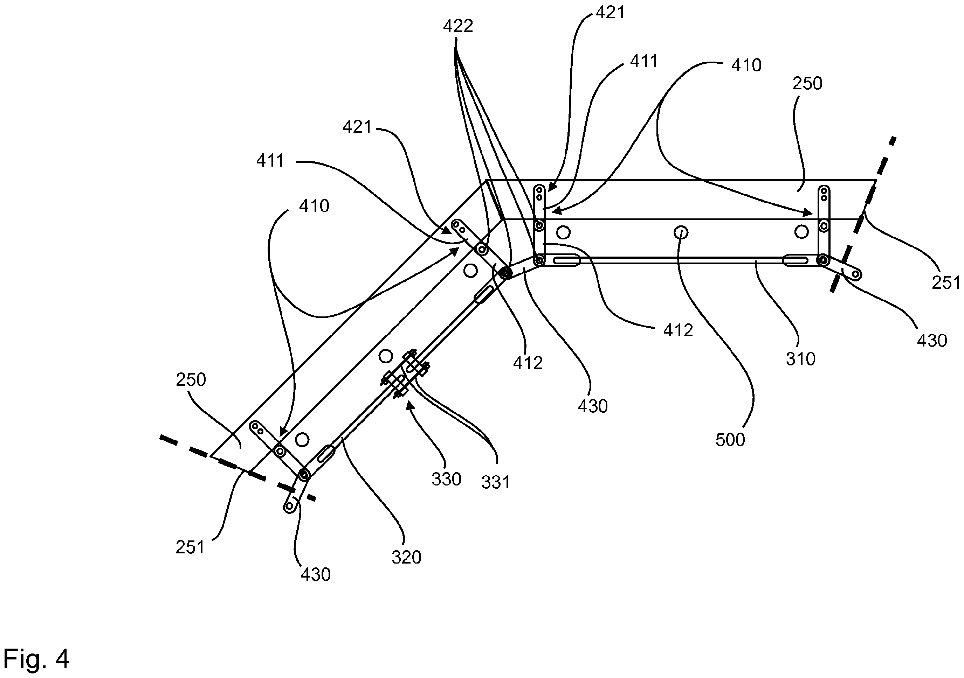

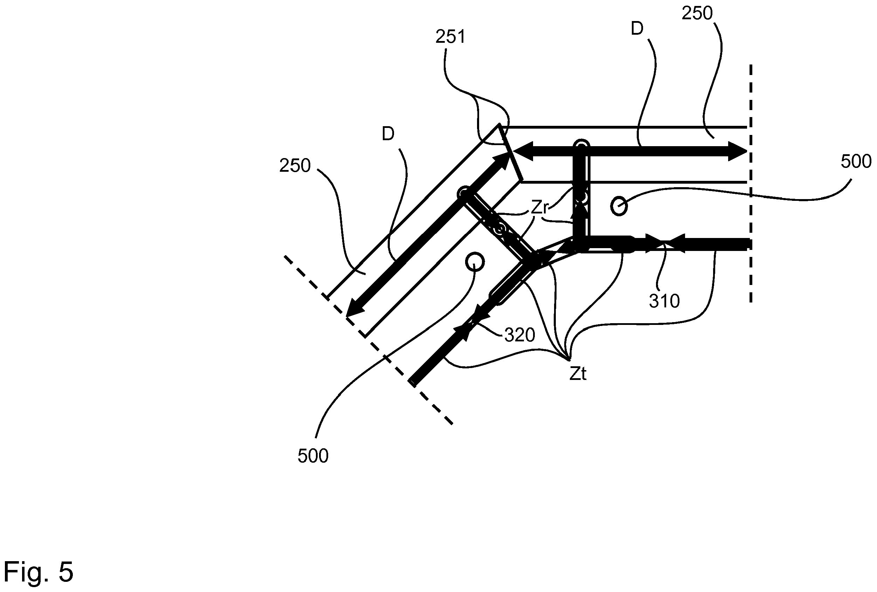

In Figur 3 ist ein Horizontalschnitt durch den Turm gemäß Figur 2 dargestellt. Figur 4 zeigt einen vergrößerten Ausschnitt des in Figur 3 mit W bezeichneten 90°-Ausschnitts. Figur 5 wiederum zeigt eine Ecke gemäß Figur 4 nochmals vergrößert und mit eingezeichneten Kraftfluss, wobei mit D die Doppelpfeile für Druckkräfte bezeichnet sind und mit Zt, Zr die Doppelpfeile für Zugkräfte in tangentialer und radialer Richtung.

Wie insbesondere in den Figuren 3-5 zu erkennen ist, kommen zwei Arten von Turmsegmenten zum Einsatz: Zum einen Turmsegmente 210 mit einem Druckelement 250 und einem Zugelement 310 und zum anderen Turmsegmente 220, die neben dem Druckelement 250 ein Zugelement 320 mit einem Spannelement 330 aufweisen. Das Spannelement 330 ist als Spannschloss mit mehreren Spannschrauben 331 ausgebildet, sodass durch Anziehen der Spannschrauben 331 der Zugelementring 300 mit einer Spannkraft beaufschlagt und so vorgespannt werden kann.

Die Druckelemente 250 sind von den Zugelementen 310, 320 in radialer Richtung bezogen auf die Längsachse des Turms und somit hier auch im Wesentlichen in horizontaler Richtung, beabstandet. Der Abstand zwischen den Druckelementen 250 und den Zugelementen 310, 320 entspricht in diesem Beispiel in etwa der Dicke der Druckelemente 250 in einer Richtung orthogonal zu deren ebener, flächige Erstreckung. Die Zugelemente 310, 320 sind auf den Innenseiten der Druckelemente 250 angeordnet und befinden sich somit im Einbauzustand und im Betriebszustand der Windenergieanlage im Inneren des Turms.

Die Zugelemente 310, 320 sind mit den Druckelementen 250 über Zwischenelemente 410 gelenkig verbunden. Die Zwischenelemente 410 weisen ein erstes Zwischenstück 411 auf, welches über Kopfbolzendübel 421 mit dem Druckstück 250 verbunden ist. Vorzugsweise werden die ersten Enden der ersten Zwischenstücke 411 mit den Kopfbolzendübeln 421 in die Druckstücke 250 einbetoniert. Gelenkig mit dem ersten Zwischenstück 411 ist ein zweites Zwischenstück 412 verbunden, das wiederum mit einem Ende der Zugelemente 310, 320 gelenkig verbunden ist. Die Zugelemente 310, 320 benachbarter Turmsegmente 210, 220 sind über Zugverbinder 430 gelenkig miteinander verbunden. Die gelenkigen Verbindungen, die insbesondere eine Verschwenkbarkeit der über sie miteinander verbundenen Elemente um eine im Wesentlichen vertikale Achse ermöglicht, werden durch Verbindungselemente 422 vorzugsweise in Form von Muttern mit Splinten realisiert. Insbesondere eine Ausführung der Verbindungen zwischen den Zugelementen 310, 320, den Zwischenelementen 410 und den Druckelementen 250 in wartungsfreier und ausfallsicherer Form ist bevorzugt. Jedes der Turmsegmente 210, 220 weist zwei Zwischenelemente 410 auf, deren Abstand voneinander in Haupterstreckungsrichtung des jeweiligen Zugelements 310, 320 ein Vielfaches von deren Abstand zu den Seitenflächen 251 der Druckelemente 250 beträgt. Die Seitenflächen 251 benachbarter Turmsegmente 210, 220 bilden eine Stoßverbindung. Die beiden Seitenflächen 251 eines jeden Druckelements 250 sind in vertikalen Ebenen ausgerichtet und ferner in radialer Richtung ausgerichtet. Die zwei Seitenflächen 251 eines jeden Druckelements 210, 220 sind somit zueinander geneigt.

Wie insbesondere in Figur 5 zu erkennen ist, sind die Zugelemente 310, 320 und die Verbindungselemente 410 im Wesentlichen mit Zugkräften Zt, Zr beaufschlagt. Die Druckelemente 250 hingegen sind im Wesentlichen durch Druckkräfte D beaufschlagt. Die durch die Spannelemente 330 in die Zugelement der 320 und von dort in den gesamten Zugelementring 300 aufgebrachte Zugvorspannung bewirkt in den Druckelementen 250 eine entsprechende Druckvorspannung. Aufgrund der Beabstandung der Zugelemente 310, 320 von den Druckelementen 250 und dem dadurch entstehenden Hebel kann erreicht werden, dass die Druckvorspannung D in den Druckelementen 250 größer ist und somit zu einer sicheren Stoßverbindung über Reibschluss an den jeweils benachbarten Seitenflächen 251 führt, als die Zugvorspannung Zt in den Zugelementen 310, 320. Ferner kann auch die im Wesentlichen radial wirkende Zugkraft Zr in den Verbindungselementen 410 reduziert werden, vorzugsweise auf einen Wert kleiner als die Zugvorspannung Zt in den Zugelement 310, 320, insbesondere auf einen Wert kleiner als die Hälfte der Zugvorspannung Zt in den Zugelementen 310, 320.

Im Zwischenraum zwischen den Druckelementen 250 und den Zugelementen 310, 320 sind vertikal verlaufende Spannkabel 500 angeordnet, welche den Turm in vertikaler Richtung vorspannen.

Vorzugsweise ist die Anzahl der Spannelemente 330 in einem Zugelementring 300 möglichst niedrig, beispielsweise kann nur ein Spannelement 330 vorgesehen sein. Dies erleichtert die Montage und führt insbesondere zu einem geringeren Zeitbedarf für die Montage, beispielsweise wenn die Spannelemente per Hand angezogen werden. Es können auch, vorzugsweise elektrische, Handwerkzeuge zum Anziehen der Spannelemente eingesetzt werden, beispielsweise Schlagschrauber oder DrehmomentSchrauber.

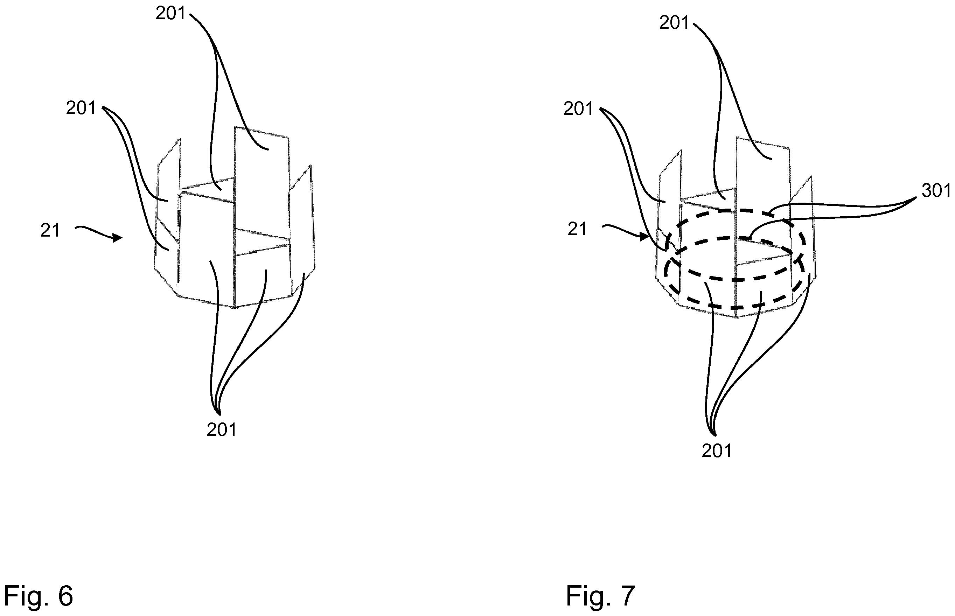

In den Figuren 6-9 ist die Montage von Turmabschnitten 21, 22 schematisch dargestellt. Figur 6 zeigt zunächst einen Turmabschnitt 21 mit Turmsegmenten 201 einer ersten Ebene. Wie zu erkennen ist, sind die oberen Verbindungsflächen 252 der Turmsegmente 201 in unterschiedlichen Ebenen angeordnet. In Figur 7 ist der Turmabschnitt 21 mit zwei durch unterbrochene Kreise angedeutete Zugelementringe 301 dargestellt.

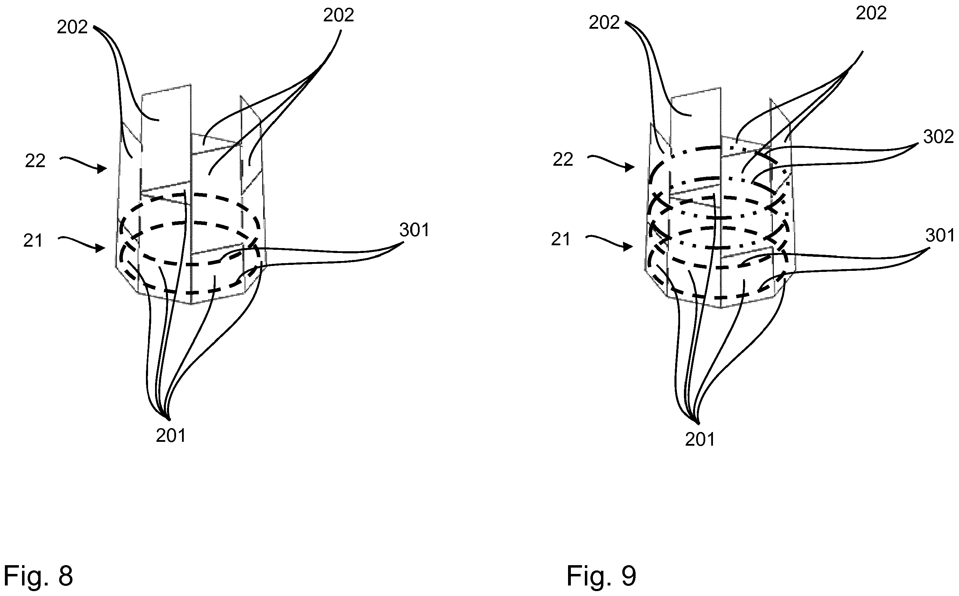

Nachdem auf diese Weise die Turmsegmente 201 der ersten Ebene vorgespannt wurden, können, wie in Figur 8 gezeigt, die Turmsegmente 202 der zweiten Ebene, also ein zweiter Turmabschnitt 22, auf den oberen Verbindungsflächen der Turmsegmente 201 der ersten Ebene, also des ersten Turmabschnitts 21, angeordnet werden. Die oberen und unteren Verbindungsflächen der Turmsegmente 202 der zweiten Ebene sind ebenfalls auf unterschiedlichen Ebenen angeordnet. Wie in Figur 9 mit den strichpunktierten Kreisen angedeutet, werden auch die Turmsegmente 202 der zweiten Ebene, also des zweiten Turmabschnitts 22, mit Zugelementringen 302 vorgespannt. Auf diese Weise können eine Vielzahl von Turmabschnitten übereinander angeordnet werden bis zu einer gewünschten Höhe des Turms.

Die Zugelementringe 301, 302 können kreisringförmig oder polygonal ausgebildet sein.

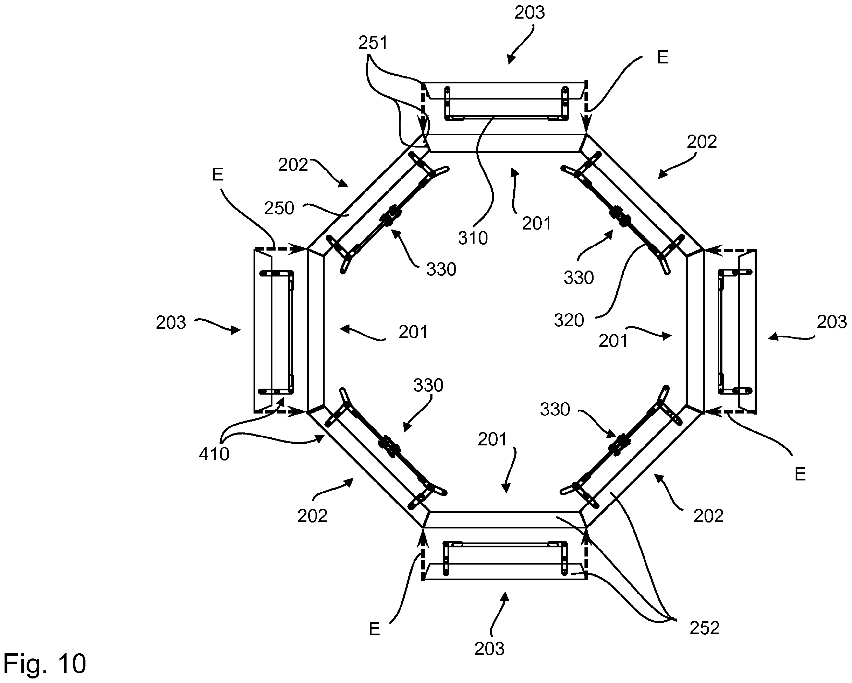

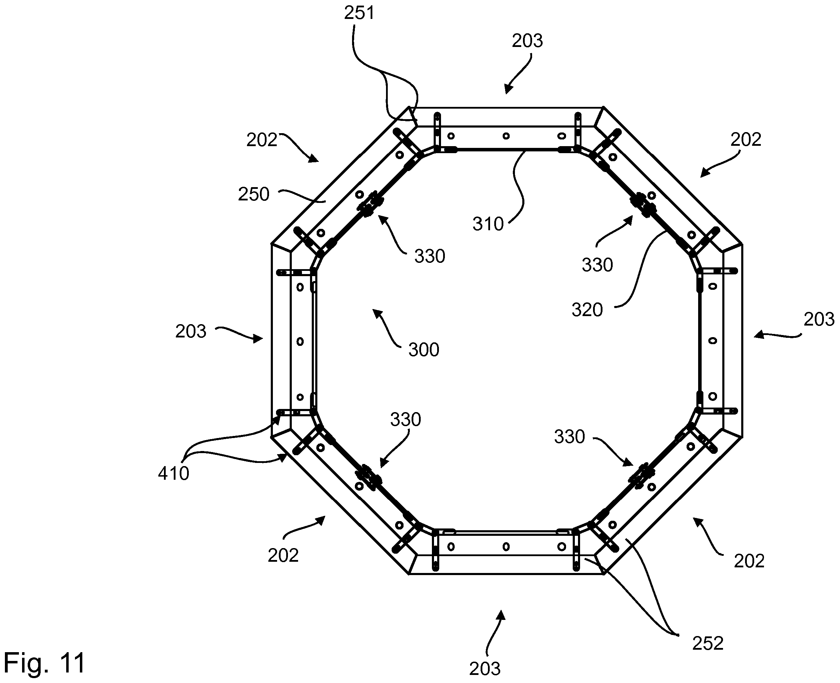

In Figur 10 ist eine Draufsicht auf einen Turm im Montagezustand mit einer ersten und zweiten Ebene von Turmsegmenten 201, 202 sowie einer noch nicht montierten dritten Ebene von Turmsegmenten 203 dargestellt. In Figur 11 ist die dritte Ebene von Turmsegmenten 203 dann montiert.

In Figur 10 sind die Zugelemente der Turmsegmente 201 der ersten Ebene nicht dargestellt. Die Turmsegmente 202 der zweiten Ebene weisen Zugelemente 320 mit Spannelementen 330 auf. Die Turmsegmente 203 der dritten Ebene weisen Zugelemente 310 ohne Spannelemente auf. Vorzugsweise sind die Zugelemente 310, 320 bereits vor der Montage an den Druckelementen 250 der Turmsegmente 202, 20 befestigt, wie in Figur 10 insbesondere an den noch nicht montierten Turmsegmenten 203 zu erkennen ist.

Aufgrund der zueinander geneigten Seitenflächen 251 der Turmsegmente 201, 202, 203 können bei der Montage die Turmsegmente 201, 202, 203 in einer Einführrichtung E in einen Zwischenraum zwischen zwei benachbarten Turmsegmenten eingeführt werden. In Figur 11 sind die Turmsegmente 203 dann im montierten Zustand dargestellt, in dem die Turmsegmente 203 in die Zwischenräume zwischen benachbarten Turmsegmenten der zweiten Ebene 202 eingesetzt sind und der Zugelementring 300 geschlossen ist.

Die hier beschriebenen Turmsegmente haben unter anderem den Vorteil, dass sie eine im Wesentlichen verformungsfreie und kraftschlüssige Verbindung der Druckelemente ermöglichen und ferner die radialen Zugkräfte klein halten. Ferner ermöglicht insbesondere die gelenkige Verbindung eine gleichmäßigere Vorspannung in den Elementen eines Turmabschnitts, so dass bereits ein Spannelement pro Turmabschnitt ausreichend sein kann.

## Patentansprüche

1. Turmsegment (200, 201, 202, 203, 210, 220) eines Turms (102, 20) einer Windenergieanlage (100), umfassend
ein Druckelement (250) und ein Zugelement (310, 320), wobei das Zugelement (310, 320) mit seiner Haupterstreckungsrichtung im Einbauzustand im Wesentlichen horizontal angeordnet und in einer Richtung orthogonal zu seiner Haupterstreckungsrichtung von dem Turmsegment (200, 201, 202, 203, 210, 220) beabstandet ist und mit dem Druckelement (250) über ein Zwischenelement (410) verbunden ist,
wobei das Zugelement (310, 320) ein Spannelement (330) aufweist,
**dadurch gekennzeichnet, dass** das Zwischenelement (410) gelenkig ausgebildet ist und/oder gelenkig mit dem Druckelement (250) und/oder mit dem Zugelement (310, 320) verbunden ist.

2. Turmsegment (200, 201, 202, 203, 210, 220) nach dem vorhergehenden Anspruch,
**dadurch gekennzeichnet, dass** das Druckelement (250) mindestens eine Seitenfläche (251) aufweist, die angeordnet und ausgebildet ist, im Einbauzustand eine Stoßverbindung mit einer Seitenfläche (251) eines weiteren Turmsegments (200, 201, 202, 203, 210, 220) zu bilden.

3. Turmsegment (200, 201, 202, 203, 210, 220) nach mindestens einem der vorhergehenden Ansprüche,
**dadurch gekennzeichnet, dass** das Druckelement (250) zwei Seitenflächen (251) aufweist, die zueinander geneigt angeordnet sind.

4. Turmsegment (200, 201, 202, 203, 210, 220) nach mindestens einem der vorhergehenden Ansprüche,
**dadurch gekennzeichnet, dass** das Zwischenelement (410) mit dem Druckelement (250) und/oder mit dem Zugelement (310, 320) mit Verbindungselementen (422) verbunden sind, wobei die Verbindungselemente (422) vorzugsweise wartungsfrei und/oder ausfallsicher ausgebildet sind.

5. Turmsegment (200, 201, 202, 203, 210, 220) nach mindestens einem der vorhergehenden Ansprüche,
**dadurch gekennzeichnet, dass** das Druckelement (250) an einer im Einbauzustand oberen Verbindungsfläche und/oder an einer im Einbauzustand unteren Verbindungsfläche ein, zwei oder mehrere Positionierungselemente aufweist.

6. Turmsegment (200, 201, 202, 203, 210, 220) nach mindestens einem der vorhergehenden Ansprüche,
**dadurch gekennzeichnet, dass** das Turmsegment (200, 201, 202, 203, 210, 220) zwei Zwischenelemente (410) aufweist, deren Abstand voneinander in Haupterstreckungsrichtung des Zugelements (310, 320) ein Vielfaches von deren Abstand zu den Seitenflächen (251) des Druckelements (250) beträgt.

7. Turmsegment (200, 201, 202, 203, 210, 220) nach mindestens einem der vorhergehenden Ansprüche,
**dadurch gekennzeichnet, dass** der Abstand zwischen dem Zugelement (310, 320) und dem Druckelement (250) maximal 50% eines Radius eines Turms beträgt, vorzugsweise maximal 25%, insbesondere mindestens oder maximal 10%.

8. Turmabschnitt (21, 22) einer Windenergieanlage (100), umfassend
zwei, drei oder mehrere Turmsegmente (200, 201, 202, 203, 210, 220) nach mindestens einem der vorhergehenden Ansprüche, deren Zugelemente (310, 320) miteinander verbunden sind und deren Druckelemente (250) über eine Stoßverbindung verbunden sind.

9. Turmabschnitt (21, 22) nach dem vorhergehenden Anspruch,
**dadurch gekennzeichnet, dass** die oberen Verbindungsflächen der Druckelemente (250) in unterschiedlichen Ebenen liegen und/oder die unteren Verbindungsflächen der Druckelemente (250) in unterschiedlichen Ebenen liegen.

10. Turm (102, 20) einer Windenergieanlage (100), umfassend
mindestens einen Turmabschnitt (21, 22) nach mindestens einem der beiden vorhergehenden Ansprüche, und/oder
mindestens ein Turmsegment (200, 201, 202, 203, 210, 220) nach mindestens einem der vorhergehenden Ansprüche 1-7.

11. Windenergieanlage (100), umfassend
mindestens einen Turm (102, 20) nach dem vorhergehenden Anspruch, und/oder
mindestens einen Turmabschnitt (21, 22) nach mindestens einem der vorhergehenden Ansprüche 8-9, und/oder
mindestens ein Turmsegment (200, 201, 202, 203, 210, 220) nach mindestens einem der vorhergehenden Ansprüche 1-7.

12. Verfahren zum Herstellen eines Turmsegments (200, 201, 202, 203, 210, 220) nach mindestens einem der vorhergehenden Ansprüche 1-7, umfassend:
- Bereitstellen eines Druckelements (250),
- Bereitstellen eines Zugelements (310, 320), das ein Spannelement aufweist,
- Verbinden des Zugelements (310, 320) mit dem Druckelement (250) über ein Zwischenelement (410), wobei das Zugelement (310, 320) mit seiner Haupterstreckungsrichtung im Einbauzustand im Wesentlichen horizontal angeordnet und in einer Richtung orthogonal zu seiner Haupterstreckungsrichtung von dem Turmsegment (200, 201, 202, 203, 210, 220) beabstandet ist, wobei das Zwischenelement (410) gelenkig ausgebildet ist und/oder gelenkig mit dem Druckelement (250) und/oder mit dem Zugelement (310, 320) verbunden ist.

13. Verfahren zum Verbinden von Turmsegmenten (200, 201, 202, 203, 210, 220) einer Windenergieanlage (100),
umfassend:
- Bereitstellen von zwei Turmsegmenten (200, 201, 202, 203, 210, 220) nach mindestens einem der vorhergehenden Ansprüche 1-7,
- Verbinden der Druckelemente (250) der beiden Turmsegmente (200, 201, 202, 203, 210, 220) durch eine Stoßverbindung,
- Verbinden der Zugelemente (310, 320) der beiden Turmsegmente (200, 201, 202, 203, 210, 220),
- Versehen des Zugelements mit einer Zugkraft durch das Spannelement.

## Claims

1. A tower segment (200, 201, 202, 203, 210, 220) of a tower (102, 20) of a wind turbine (100), including
a compression element (250) and a tension element (310, 320), wherein the tension element (310, 320) is arranged with its main direction of extent substantially horizontally in the installation state and is spaced from the tower segment (200, 201, 202, 203, 210, 220) in a direction in orthogonal relationship with its main direction of extent and is connected to the compression element (250) by way of an intermediate element (410),
wherein the tension element (310, 320) has a clamping element (330),
**characterised in that** the intermediate element (410) is of a pivotable configuration and/or is pivotably connected to the compression element (250) and/or to the tension element (310, 320).

2. A tower segment (200, 201, 202, 203, 210, 220) according to the preceding claim
**characterised in that** the compression element (250) has at least one lateral surface (251) which is arranged and adapted in the installation state to form a butt connection to a lateral surface (251) of a further tower segment (200, 201, 202, 203, 210, 220).

3. A tower segment (200, 201, 202, 203, 210, 220) according to at least one of the preceding claims
**characterised in that** the compression element (250) has two lateral surfaces (251) which are arranged inclinedly relative to each other.

4. A tower segment (200, 201, 202, 203, 210, 220) according to at least one of the preceding claims
**characterised in that** the intermediate element (410) is connected to the compression element (250) and/or to the tension element (310, 320) with connecting elements (422), wherein the connecting elements (422) are of a preferably maintenance-free and/or fail-safe nature.

5. A tower segment (200, 201, 202, 203, 210, 220) according to at least one of the preceding claims
**characterised in that** the compression element (250) has one, two or more positioning elements at a connecting surface which is an upper surface in the installation state and/or at a connecting surface which is a lower surface in the installation state.

6. A tower segment (200, 201, 202, 203, 210, 220) according to at least one of the preceding claims
**characterised in that** the tower segment (200, 201, 202, 203, 210, 220) has two intermediate elements (410), the spacing from each other in the main direction of extent of the tension element (310, 320) is a multiple of the spacing thereof in relation to the lateral surfaces (251) of the compression element (250).

7. A tower segment (200, 201, 202, 203, 210, 220) according to at least one of the preceding claims
**characterised in that** the spacing between the tension element (310, 320) and the compression element (250) is at a maximum 50% of a radius of a tower, preferably a maximum of 25%, in particular at least or at a maximum 10%.

8. A tower portion (21, 22) of a wind turbine (101), including two, three or more tower segments (200, 201, 202, 203, 210, 220) according to at least one of the preceding claims, the tension elements (310, 320) of which are connected together and the compression elements (250) of which are connected by way of a butt connection.

9. A tower portion (21, 22) according to the preceding claim
**characterised in that** the upper connecting surfaces of the compression elements (250) are in different planes and/or the lower connecting surfaces of the compression elements (250) are in different planes.

10. A tower (102, 20) of a wind turbine (100) including
at least one tower portion (21, 22) according to at least one of the two preceding claims, and/or
at least one tower segment (200, 201, 202, 203, 210, 220) according to at least one of preceding claims 1 to 7.

11. A wind turbine (100) including
at least one tower (102, 20) according to the preceding claim, and/or
at least one tower portion (21, 22) according to at least one of preceding claims 8 and 9, and/or
at least one tower segment (200, 201, 202, 203, 210, 220) according to at least one of preceding claims 1 to 7.

12. A method of producing a tower segment (200, 201, 202, 203, 210, 220) according to at least one of preceding claims 1 to 7, including:
- providing a compression element (250),
- providing a tension element (310, 320) having clamping element,
- connecting the tension element (310, 320) to the compression element (250) by way of an intermediate element (410), wherein the tension element (310, 320) is arranged with its main direction of extent substantially horizontally in the installation state and is spaced from the tower segment (200, 201, 202, 203, 210, 220) in a direction in orthogonal relationship with its main direction of extent, wherein the intermediate element (410) is of a pivotable configuration and/or is pivotably connected to the compression element (250) and/or to the tension element (310, 320).

13. A method of connecting tower segments (200, 201, 202, 203, 210, 220) of a wind turbine (100), including:
- providing two tower segments (200, 201, 202, 203, 210, 220) according to at least one of preceding claims 1 to 7,
- connecting the compression elements (250) of the two tower segments (200, 201, 202, 203, 210, 220) by a butt connection, and
- connecting the tension elements (310, 320) of the two tower segments (200, 201, 202, 203, 210, 220),
- providing the tension element with a tensile force through the clamping element.

## Revendications

1. Segment de mât (200, 201, 202, 203, 210, 220) d'un mât (102, 20) d'une éolienne (100), comprenant
un élément de pression (250) et un élément de traction (310, 320), dans lequel l'élément de traction (310, 320) avec sa direction d'étendue principale dans l'état monté est disposé sensiblement horizontalement et dans une direction perpendiculaire à sa direction d'étendue principale est espacé du segment de mât (200, 201, 202, 203, 210, 220) et est relié à l'élément de pression (250) par l'intermédiaire d'un élément intermédiaire (410),
dans lequel l'élément de traction (310, 320) présente un élément de serrage (330),
**caractérisé en ce que** l'élément intermédiaire (410) est réalisé de manière articulée et/ou est relié de manière articulée à l'élément de pression (250) et/ou à l'élément de traction (310, 320).

2. Segment de mât (200, 201, 202, 203, 210, 220) selon la revendication précédente,
**caractérisé en ce que** l'élément de pression (250) présente au moins une surface latérale (251), qui est disposée et réalisée pour former dans l'état monté une liaison bout à bout avec une surface latérale (251) d'un autre segment de mât (200, 201, 202, 203, 210, 220).

3. Segment de mât (200, 201, 202, 203, 210, 220) selon au moins l'une des revendications précédentes,
**caractérisé en ce que** l'élément de pression (250) présente deux surfaces latérales (251), qui sont disposées de manière inclinée l'une vers l'autre.

4. Segment de mât (200, 201, 202, 203, 210, 220) selon au moins l'une des revendications précédentes,
**caractérisé en ce que** l'élément intermédiaire (410) est relié à l'élément de pression (250) et/ou à l'élément de traction (310, 320) avec des éléments de liaison (422), dans lequel les éléments de liaison (422) sont réalisés de préférence sans entretien et/ou à sécurité intrinsèque.

5. Segment de mât (200, 201, 202, 203, 210, 220) selon au moins l'une des revendications précédentes,
**caractérisé en ce que** l'élément de pression (250) présente sur une surface de liaison supérieure dans l'état monté et/ou sur une surface de liaison inférieure dans l'état monté un, deux éléments de positionnement ou plus.

6. Segment de mât (200, 201, 202, 203, 210, 220) selon au moins l'une des revendications précédentes,
**caractérisé en ce que** le segment de mât (200, 201, 202, 203, 210, 220) présente deux éléments intermédiaires (410), dont la distance l'un par rapport à l'autre dans la direction d'étendue principale de l'élément de traction (310, 320) atteint un multiple de la distance de ceux-ci par rapport aux surfaces latérales (251) de l'élément de pression (250).

7. Segment de mât (200, 201, 202, 203, 210, 220) selon au moins l'une des revendications précédentes,
**caractérisé en ce que** la distance entre l'élément de traction (310, 320) et l'élément de pression (250) atteint au maximum 50 % d'un rayon d'un mât, de préférence au maximum 25 %, en particulier au moins ou au maximum 10 %.

8. Partie de mât (21, 22) d'une éolienne (100), comprenant deux, trois segments de mât (200, 201, 202, 203, 210, 220) ou plus selon au moins l'une des revendications précédentes, dont les éléments de traction (310, 320) sont reliés les uns aux autres et dont les éléments de pression (250) sont reliés par l'intermédiaire d'une liaison bout à bout.

9. Partie de mât (21, 22) selon la revendication précédente,
**caractérisée en ce que** les surfaces de liaison supérieures des éléments de pression (250) se situent dans différents plans et/ou les surfaces de liaison inférieures des éléments de pression (250) se situent dans différents plans.

10. Mât (102, 20) d'une éolienne (100), comprenant
au moins une partie de mât (21, 22) selon au moins l'une des deux revendications précédentes, et/ou
au moins un segment de mât (200, 201, 202, 203, 210, 220) selon au moins l'une des revendications précédentes 1-7.

11. Eolienne (100), comprenant
au moins un mât (102, 20) selon la revendication précédente,
et/ou
au moins une partie de mât (21, 22) selon au moins l'une des revendications précédentes 8-9, et/ou
au moins un segment de mât (200, 201, 202, 203, 210, 220) selon au moins l'une des revendications précédentes 1-7.

12. Procédé pour fabriquer un segment de mât (200, 201, 202, 203, 210, 220) selon au moins l'une des revendications précédentes 1-7, comprenant :
- la fourniture d'un élément de pression (250),
- la fourniture d'un élément de traction (310, 320), qui présente un élément de serrage,
- la liaison de l'élément de traction (310, 320) à l'élément de pression (250) par l'intermédiaire d'un élément intermédiaire (410), dans lequel l'élément de traction (310, 320) avec sa direction d'étendue principale dans l'état monté est disposé sensiblement horizontalement et dans une direction perpendiculaire à sa direction d'étendue principale est espacé du segment de mât (200, 201, 202, 203, 210, 220), dans lequel l'élément intermédiaire (410) est réalisé de manière articulée et/ou relié de manière articulée à l'élément de pression (250) et/ou à l'élément de traction (310, 320) .

13. Procédé pour relier les segments de mât (200, 201, 202, 203, 210, 220) d'une éolienne (100),
comprenant :
- la fourniture de deux segments de mât (200, 201, 202, 203, 210, 220) selon au moins l'une des revendications précédentes 1-7,
- la liaison des éléments de pression (250) des deux segments de mât (200, 201, 202, 203, 210, 220) par une liaison bout à bout,
- la liaison des éléments de traction (310, 320) des deux segments de mât (200, 201, 202, 203, 210, 220),
- le fait de pourvoir l'élément de traction d'une force de traction au moyen de l'élément de serrage.
